# EUROPÄISCHE PATENTANMELDUNG

(11) **EP 2 987 620 A1**
(43) Veröffentlichungstag der Anmeldung: **24.02.2016**
(21) Anmeldenummer: 14181651.2
(22) Anmeldetag: 20.08.2014
(51) Int. Cl.: B29C 49/68, B29C 49/46, B29C 49/06, B29C 49/12, B29C 49/36

(54) **Formfüllmaschine zum Ausformen und Füllen von Behältern**

(71) Anmelder: Krones AG, 93073 Neutraubling (DE)
(72) Erfinder: Albrecht, Thomas, 93073 Neutraubling (DE)
(74) Vertreter: Grünecker Patent- und Rechtsanwälte PartG mbB

(57) **Zusammenfassung**

Die Erfindung betrifft eine Formfüllmaschine zum Ausformen und Füllen von Kunststoffbehältern (2) mit wenigstens einer Behandlungsstation (5) zum expandierenden Umformen von Vorformlingen (3) zu Kunststoffbehältern (2) in einer Hohlform (6) und zum Einfüllen eines im Wesentlichen flüssigen Produkts oder wenigstens einer flüssigen oder festen Komponente des im Wesentlichen flüssigen Produkts in die Kunststoffbehälter (2) in der Hohlform (6) und mit einem Ofen (7) mit einer Vorheizstrecke zum Aufheizen der Vorformlinge (3). Die Formfüllmaschine umfasst eine Pasteurisierstrecke zum Pasteurisieren der gefüllten Kunststoffbehälter (2), wobei zum Pasteurisieren zumindest teilweise Wärme des Ofens (7) verwendet wird.

## Beschreibung

Die Erfindung betrifft eine Formfüllmaschine gemäß dem Oberbegriff des Anspruchs 1.

### Stand der Technik

Bekanntermaßen lassen sich Kunststoffbehälter im Streckblasverfahren aus Vorformlingen (Preforms) herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Erfolgt in einer kombinierten Blas- und Füllmaschine eine heißaseptische oder heißsterile Abfüllung von Füllgut, so muss der gefüllte Behälter und das im Behälter befindliche Füllgut für eine gewisse Zeit auf einer Sterilisationstemperatur gehalten werden, um eine erforderliche Sterilisationsrate zu erreichen.

Die DE 10 2011 012 751 A1 beschreibt ein Verfahren sowie eine Anlage zur Herstellung von mit Füllgut gefüllten Behältern aus Vorformlingen aus einem thermoplastischen Material, wobei ein Vorformling während einer Form- und Füllphase in einer Form durch Druckeinwirkung des zugeführten Füllguts in den jeweiligen Behälter umgeformt wird. Der verschlossene Behälter wird zur weiteren Sterilisation des Füllguts und des Behälterinnenraums zu einer separaten Pasteurisierungseinrichtung transportiert und dort auf eine Sterilisationstemperatur erhitzt, die höher ist als die Temperatur des Füllguts während des Form- und Füllprozesses.

### Aufgabe der Erfindung

Aufgabe der vorliegenden Erfindung ist es, bekannte Vorrichtungen zum Ausformen und Füllen von Kunststoffbehältern in vorteilhafter Weise weiterzubilden, so dass eine erforderliche Sterilisation eines gefüllten Behälters und eine Pasteurisierung der im gefüllten Behälter befindlichen Flüssigkeit mit einer Energieeinsparung und vorzugsweise unter einem verbesserten Wirkungsgrad erfolgen kann.

### Lösung

Diese Aufgabe wird erfindungsgemäß durch die Formfüllmaschine nach Anspruch 1 gelöst. Bevorzugte Ausführungsformen der Erfindung sind in den Unteransprüchen offenbart.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Bei den herzustellenden und zu befüllenden Kunststoffbehältern kann es sich um Flaschen aus Polyester, insbesondere um PET-Flaschen handeln. Formen, insbesondere Blasformen zum Herstellen von Kunststoffbehältern sind im Stand der Technik hinlänglich bekannt und werden daher nicht weiter beschrieben. Im Allgemeinen umfasst eine solche Form zwei seitliche Formhälften und eine Bodenform, die nach Einbringen eines in einem Ofen aufgewärmten Vorformlings zusammengefahren werden, um einen Kunststoffbehälter aus dem Vorformling auszuformen. Nach Herstellung und Befüllung des Kunststoffbehälters wird die Blasform geöffnet, um den gefüllten Behälter zu entnehmen.

Eine Formfüllmaschine zum Ausformen und Füllen von Kunststoffbehältern umfasst wenigstens eine Behandlungsstation zum expandierenden Umformen von Vorformlingen zu Kunststoffbehältern in einer Hohlform und zum Einfüllen eines im Wesentlichen flüssigen Produkts oder wenigstens einer flüssigen oder festen Komponente des im Wesentlichen flüssigen Produkts in die Kunststoffbehälter in der Hohlform und einen Ofen mit einer Vorheizstrecke zum Aufheizen der Vorformlinge. Die Formfüllmaschine umfasst zudem eine Pasteurisierstrecke zum Pasteurisieren der gefüllten Kunststoffbehälter, wobei zum Pasteurisieren zumindest teilweise die Wärme des Ofens verwendet wird.

Die Vorheizstrecke dient dazu, die Vorformlinge auf eine Vorheiztemperatur aufzuwärmen, so dass die Vorformlinge nach einem Einbringen in die Hohlform zu den Kunststoffbehältern umgeformt werden können. Das Aufheizen kann gemäß einem bestimmten Temperaturprofil erfolgen, welches das Material des Vorformlings sowie auch eine gewünschte Wanddickenverteilung des durch das expandierende Umformen erhaltenen Behälters berücksichtigen kann. Die Wärme, die zum Aufheizen auf die Vorheiztemperatur erforderlich ist, kann mittels Heizelementen, wie beispielsweise Heizstrahlern, erzeugt werden. Die Vorheiztemperatur kann in einem Bereich von 70° bis 80° liegen. Hierbei kann vorgesehen sein, dass der Mündungsbereich der Vorformlinge nur auf eine niedrigere Temperatur als die anderen Bereiche des Vorformlings oder gar nicht aufgeheizt wird, um ein Verformen des Mündungsbereichs zu verhindern.

Die Vorformlinge können entlang der Vorheizstrecke in dem Ofen mittels einer Transportvorrichtung transportiert werden, wobei die Transportvorrichtung vorzugsweise steuerbar ist. Dadurch ist es möglich die Transportgeschwindigkeit und somit die Verweildauer der Vorformlinge in dem Ofen nach Bedarf festzulegen. Die Transportvorrichtung kann als NeckHandling ausgebildet sein.

Für eine Energieersparnis ist es vorteilhaft zumindest teilweise die Wärme des Ofens, der auch zum Aufheizen der Vorformlinge dient, zum Pasteurisieren des gefüllten Behälters zu verwenden.

Die Pasteurisierstrecke kann durch den Ofen verlaufen. Der Ausdruck "durch" soll hier insbesondere angeben, dass die Pasteurisierstrecke derart in dem Ofen angeordnet ist, dass die Wärme des Ofens direkt auf die Pasteurisierstrecke und somit auf die entlang der Pasteurisierstrecke transportierten befüllten Behälter wirken kann. Da die Pasteurisierstrecke durch den Ofen verläuft, kann die Wärme des Ofens direkt genutzt werden. Beispielsweise können die gefüllten Behälter mit den Heizelementen des Ofens, mit denen auch die Vorformlinge erwärmt werden, erwärmt und die im Behälter befindliche Flüssigkeit pasteurisiert werden. Hierbei können verschiedene Anordnungen der Pasteurisierstrecke in Bezug zu der Vorheizstrecke vorgesehen sein.

Diese Pasteurisierstrecke kann in einer ersten Ebene und die Vorheizstrecke der Vorformlinge in einer zweiten Ebene des Ofens angeordnet sein, wobei die erste Ebene und die zweite Ebene übereinander angeordnet sind.

Die Bezeichnungen "erste" bzw. "zweite" dienen nur der Unterscheidung der beiden Ebenen und stellen sonst keine Begrenzung dar. Die Bezeichnung "Ebene" soll hierbei trotzdem die Dreidimensionalität der Vorformlinge bzw. der gefüllten Kunststoffbehälter berücksichtigen. Der Fachmann erkennt, dass eine solche Ebene beispielsweise durch die Mündungsdichtfläche der Vorformlinge bzw. der gefüllten Kunststoffbehälter oder auch durch die Bodenfläche der gefüllten Kunststoffbehälter verlaufen kann.

Zum Pasteurisieren der gefüllten Kunststoffbehälter und zum Aufheizen der Vorformlinge können in dem Ofen Heizelemente angeordnet sein. Mittels der Heizelemente lässt sich beispielsweise durch Infrarotstrahlung oder durch Mikrowellenstrahlung die erforderliche Temperatur für das Aufheizen der Vorformlinge und zum Pasteurisieren der gefüllten Kunststoffbehälter erzeugen.

In einer Ausführungsform können erste Heizelemente zum Pasteurisieren der gefüllten Kunststoffbehälter und zweite Heizelemente zum Aufheizen der Vorformlinge vorgesehen sein. Somit können die ersten Heizelemente beispielsweise auf eine andere Temperatur als die zweiten Heizelemente eingestellt werden, wodurch es auf einfache Weise möglich ist, unterschiedliche Temperaturen für die Pasteurisierung der gefüllten Kunststoffbehälter bzw. für das Aufheizen der Vorformlinge zu erreichen.

In einer anderen Ausführungsform können die Heizelemente sowohl zum Pasteurisieren der gefüllten Kunststoffbehälter als auch zum Aufheizen der Vorformlinge vorgesehen sein. Somit kann die Anzahl der erforderlichen Heizelemente kleiner gehalten werden als in der zuvor erwähnten Ausführungsform. Um für das Pasteurisieren eine andere Temperatur zur Verfügung zu haben, können ein Abschnitt oder mehrere Abschnitte der Pasteurisierstrecke gegenüber den Heizelementen isoliert sein, so dass keine Zufuhr von Wärme erfolgt. Es kann auch vorgesehen sein, dass in derart isolierten Abschnitten Umgebungsluft eingebracht wird, um für eine Abkühlung der gefüllten Kunststoffbehälter zu sorgen.

Eine erste Transportrichtung der Pasteurisierstrecke kann gleichsinnig oder gegensinnig zu einer zweiten Transportrichtung der Vorheizstrecke ausgerichtet sein.

Die Bezeichnungen "erste" bzw. "zweite" dienen nur der Unterscheidung der Transportrichtungen und stellen sonst keine Begrenzung dar. Somit kann je nach baulicher Gegebenheit in der Umgebung der Formfüllmaschine die geeignetste Anordnung gewählt werden, so dass die Zufuhr der Vorformlinge bzw. der gefüllten Kunststoffbehälter in den Ofen von der einen und/oder der anderen Seite erfolgen kann.

Wenn die Vorheizstrecke der Vorformlinge in dem Ofen zuerst in eine erste Richtung und dann durch Umlenkung in eine zweite Richtung, die der ersten Richtung entgegengesetzt ist, verläuft, können die Pasteurisierstrecke und der Teil der Vorheizstrecke der ersten Richtung im Wesentlichen übereinander oder können die Pasteurisierstrecke und der Teil der Vorheizstrecke der zweiten Richtung im Wesentlichen übereinander verlaufen oder die Pasteurisierstrecke kann im Wesentlichen unterhalb eines Bereichs zwischen dem Teil der Vorheizstrecke der ersten Richtung und dem Teil der Vorheizstrecke der zweiten Richtung angeordnet sein.

In einer weiteren Ausführungsform kann die Formfüllmaschine zudem eine Pasteurisiereinheit umfassen, in der die Pasteurisierstrecke angeordnet ist, wobei die Pasteurisiereinheit derart ausgebildet ist, um durch die Wärme des Ofens erwärmt zu werden.

Die Formfüllmaschine kann zudem einen oder mehrere Wärmetauscher umfassen, die dazu ausgelegt sind, die Wärme des Ofens zumindest teilweise an die Pasteurisiereinheit zu übertragen. Somit verläuft die Pasteurisierstrecke der befüllten Kunststoffbehälter zwar nicht durch den Ofen, jedoch kann die Wärme des Ofens trotzdem zum Pasteurisieren verwendet werden, so dass eine Energieeinsparung erreicht und der Wirkungsgrad der Pasteurisiereinheit verbessert werden kann.

In den verschiedenen Ausführungsformen kann die Pasteurisierstrecke aktive Streckenabschnitte, die einer Zufuhr von Wärme dienen, und passive Streckenabschnitte, bei denen keine Zufuhr von Wärme erfolgt oder Umgebungsluft eingebracht wird, umfassen.

Die Verwendung aktiver und passiver Streckenabschnitte ist besonders dann vorteilhaft, wenn die gleichen Heizelemente sowohl zum Pasteurisieren der gefüllten Kunststoffbehälter als auch zum Aufheizen der Vorformlinge in dem Ofen vorgesehen sind. Um für das Pasteurisieren eine andere Temperatur zur Verfügung zu haben als von den Heizelementen geliefert wird, können ein Abschnitt oder mehrere Abschnitte der Pasteurisierstrecke gegenüber den Heizelementen isoliert sein, so dass keine Zufuhr von Wärme erfolgt. Es kann auch vorgesehen sein, dass in derart isolierten Abschnitten (passiver Streckenabschnitt) Umgebungsluft eingebracht wird, um für eine Abkühlung der gefüllten Kunststoffbehälter zu sorgen.

In den verschiedenen Ausführungsformen kann zudem vorgesehen sein, dass eine erste Transportvorrichtung der Vorformlinge der Vorheizstrecke unabhängig von einer zweiten Transportvorrichtung der gefüllten Kunststoffbehälter der Pasteurisierstrecke steuerbar ist.

Die Bezeichnungen "erste" bzw. "zweite" dienen nur der Unterscheidung der Transportvorrichtungen und stellen sonst keine Begrenzung dar. Die erste Transportvorrichtung kann ein Neck-Handling sein. Dadurch, dass die beiden Transportvorrichtungen unabhängig voneinander steuerbar sind, kann die Verweildauer der Vorformlinge in der Vorheizstrecke von der Verweildauer der befüllten Kunststoffbehälter in der Pasteurisierstrecke verschieden sein.

Die Formfüllmaschine kann zudem eine Sterilisierungsvorrichtung umfassen, die dazu ausgelegt ist, mittels durch die Wärme des Ofens erzeugten Dampfs, die gefüllten Kunststoffbehälter zu sterilisieren.

### Kurze Figurenbeschreibung

Weitere Vorteile und Ausführungsformen ergeben sich aus den beigefügten Zeichnungen. Darin zeigt:
Figur 1 eine Draufsicht auf eine Formfüllmaschine mit einem Ofen,
Figur 2 eine schematische Darstellung einer Formfüllstation im Längsschnitt,
Figur 3 einen Querschnitt einer ersten Ausführungsform,
Figur 4 einen Querschnitt einer zweiten Ausführungsform,
Figur 5 einen Querschnitt einer dritten Ausführungsform und
Figur 6 einen Querschnitt einer vierten Ausführungsform.

### Ausführliche Figurenbeschreibung

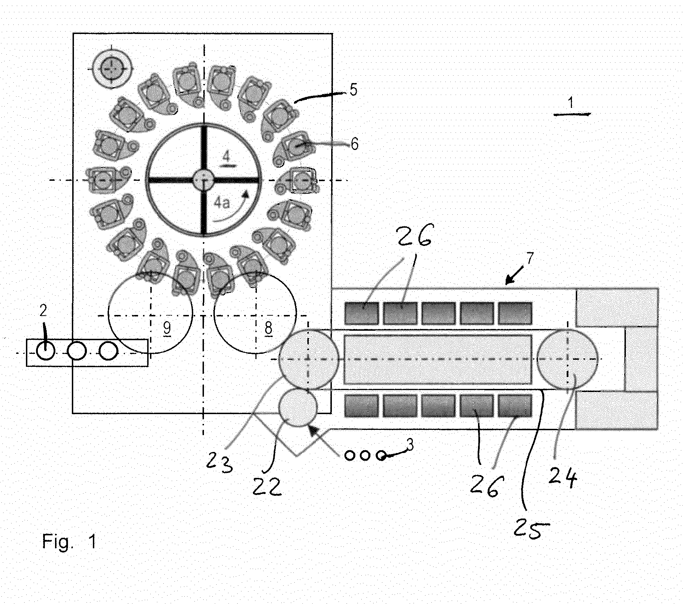

In Figur 1 ist eine schematische Draufsicht einer Ausführungsform einer Formfüllmaschine 1 dargestellt. Diese umfasst in der hier dargestellten Ausführungsform ein Karussell 4, das in der angegebenen Drehrichtung 4a drehbar ausgeführt ist. An dem Karussell 4 sind mehrere Behandlungsstationen 5 angeordnet, in denen ein Vorformling 3 zu einem Behälter 2 ausgeformt und dabei befüllt werden kann. Jede der mit dem Karussell 4 umlaufende Formfüllstation 5 umfasst eine Hohlform 6, in der der Vorformling 3 eingespannt, ausgeformt und befüllt wird. Zu diesem Zweck ist vorgesehen, dass jede Formfüllstation 5 über ein Füllventil zum Abfüllen von Produkt in den Vorformling 3 und/oder in den Behälter 2 verfügt.

Die schematisch dargestellten Vorformlinge 3 werden mittels eines Zuführsterns 22 an einen Einlaufstern 23 eines Ofens 7 übergeben und von dort an eine Transportvorrichtung 25, beispielsweise ein Neck-Handling. Die Vorformlinge 3 werden durch den Ofen 7, beispielsweise einen Infrarot-Ofen, entlang einer Vorheizstrecke 25 mittels der Transportvorrichtung 25 transportiert. In dem Ofen 7 werden die Vorformlinge 3 mit einem Temperaturprofil, das beispielsweise von dem Material, der Form und/oder der Größe der Vorformlinge 3 abhängt, entlang ihrer Längsachse erwärmt. Für das Erwärmen der Vorformlinge 3 sind Heizelemente 26 beiderseits der Vorheizstrecke 25 vorgesehen. Mittels eines Umlenksterns 24 werden die Vorformlinge 3 in dem Ofen 7 umgelenkt und werden über den Einlaufstern 23 des Ofens 7 an einen Einlaufstern 8 des Karussells übergeben. Der Transport der Vorformlinge 3 kann dann beispielsweise im Neck-Handling-Verfahren erfolgen. Bei der Übergabe an das Karussell 4 werden die Vorformlinge 3 in die geöffneten Hohlformen 6 eingebracht. Während des Umlaufs der Hohlformen 6 um das Karussell 4 werden die Vorformlinge 3 innerhalb der nunmehr geschlossenen Hohlformen 6 mittels der Füllformmaschine 1 ausgeformt und befüllt. Vor Übergabe an einen Auslaufstern 9 werden die Hohlformen 6 geöffnet, um die vollständig ausgeformten und befüllten Kunststoffbehälter 2 entnehmen zu können. Von dem Auslaufstern 9 können die fertigen und befüllten Behälter 2 zur weiteren Behandlung an eine Transportvorrichtung übergeben werden. Es können auch weitere Behandlungsstationen, wie beispielsweise Verschließvorrichtungen und/oder Etikettierstationen, in der Peripherie des Karussells 4 oder als Teil der Formfüllmaschine 1 vorgesehen werden. Grundsätzlich umfasst die erfindungsgemäße Formfüllmaschine jedoch wenigstens ein Karussell 4 mit entsprechenden Behandlungsstationen 5, beispielsweise Formfüllstationen, in denen die Behälter 2 bzw. Vorformlinge 3 ausgeformt und befüllt werden können.

Bei dem Karussell handelt es sich vorzugsweise um ein Blasrad. Der Rundläufer dreht sich insbesondere um eine vertikale Achse, deren Verlängerung den Erdmittelpunkt schneidet.

Insbesondere sind die Stationen alle in äquidistanten Abständen zueinander angeordnet. Die Stationen weisen insbesondere Kavitäten, die Hohlformen, auf, innerhalb derer die Behälter gegen die inneren Wände der Kavität expandiert werden, so dass die fertig ausgeformten Behälter die (negative) Form der inneren Wände der Kavität erhalten.

Insbesondere ist daran gedacht, die befüllten Behälter noch innerhalb dieser Kavität zu verschließen. Hierfür kann an der Peripherie des Rundläufers eine Verschlusszuführung angeordnet sein.

Insbesondere findet die Herstellung bzw. Expansion und das Befüllen der Behälter innerhalb eines Raums mit kontaminationsarmer Umgebung transportiert. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird.
- Die Antriebe für verschiedenste Bewegungen der Kavität sind außerhalb des Reinraums angeordnet, so beispielsweise die Antriebe für das Öffnen und Schließen der Kavität (Hohlform) und/oder die für das Bewegen einer Reckstange und/oder die für ein Anheben oder Senken eines Behälters und/oder die Bewegung einer Blas- oder Fülldüse.
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Insbesondere wird der Behälter auf ein und demselben Karussell (Rundläufer) expandiert und mit dem zu verpackenden Endprodukt befüllt.

Insbesondere handelt es sich bei den Behältern vor dem Expandieren um Kunststoffvorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport vorgesehen ist.

In Transportrichtung der Behälter stromaufwärts kann eine Erwärmungseinrichtung vorgesehen sein, welche die kalt angelieferten Vorformlinge erwärmt. Als Erwärmungseinrichtung kann ein Infrarotofen dienen, durch welchen die Vorformlinge transportiert werden. An zumindest einer Seite einer tunnelförmigen Heizstrecke durch den Ofen sind insbesondere Infrarotstrahler angeordnet. Anstatt des Infrarotofens kann auch eine Mikrowellenerwärmungseinrichtung vorgesehen sein, in der insbesondere für jeden Vorformling individuell zugeordnete Kavitäten zur Erwärmung angeordnet sind. Während es sich beim Mikrowellenofen bevorzugt um einen Rundläufer handelt, werden die Vorformlinge beim Infrarotofen zumindest einen Teil der Strecke geradlinig transportiert.

Anstatt der eben beschriebenen Verfahren und Vorrichtungen können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. U.U. muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt. Werden die Vorformlinge innerhalb eines Reinraums spritzgegossen, so ist u.U. keine weitere Sterilisation dieser nötig, wenn sich der Reinraum bis zu einer Position hin erstreckt, an der ein Verschluss auf den Behälter nach dem Befüllen aufgebracht wird.

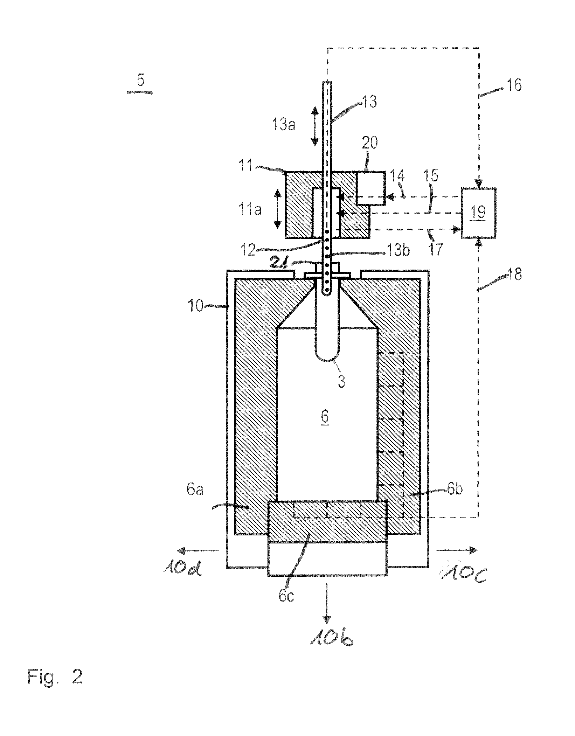

Figur 2 zeigt eine Seitenansicht einer beispielhaften Ausführung einer Formfüllmaschine gemäß der vorliegenden Erfindung. Die Formfüllmaschine umfasst eine Hohlform 6, wobei die Hohlform 6 in der Darstellung aus zwei mittels eines mehrteiligen Formträgers 10 in die Pfeilrichtungen 10a, 10b verfahrbaren Seitenteilen 6a und 6b und einem entlang der Pfeilrichtung 10c verfahrbaren Bodenteil 6c besteht. Nach Einbringen eines Vorformlings 3 wird die Hohlform 6 durch Zusammenfahren der Formteile 6a, 6b, 6c geschlossen.

Die Hohlform 6 kann dabei derart ausgebildet werden, dass sie druckdicht mit dem Vorformling 3 abschließt und somit eine druckdichte Hohlform 6 bildet, die mittels eines Medienverteilers 19 über Absaugleitungen 18 für die Hohlform 6 zur Unterstützung des Ausformvorgangs auf Unterdruck evakuiert werden kann.

Durch lineares Verfahren entlang der gezeigten Pfeilrichtung 11a kann eine Fluiddüse eines Ventilblocks 11 druckdicht auf den Mündungsbereich 21 des Vorformlings aufgesetzt werden, über die Medien und/oder Füllprodukte in den Vorformling mit dem jeweils gewünschten Druck eingespritzt bzw. -geblasen werden können. Zu diesem Zweck ist der Ventilblock 11 über eine Zuführleitung für ein Formfluid 14 und/oder eine Zuführleitung für ein Füllprodukt 15 mit dem Medienverteiler 19 verbunden. Regelbare Ventile im Ventilblock 11 regeln dabei die Zufuhr von Formfluid und/oder Füllprodukt.

Bei dem Formfluid kann es sich um ein gasförmiges Medium handeln, welches beispielsweise mit einem Kompressor 20 auf den zum Ausformen des Vorformlings 3 erforderlichen Druck komprimiert wird. Alternativ kann das Formfluid jedoch auch ein Füllprodukt sein. Auch in diesem Fall kann, insbesondere in Abhängigkeit von dem auszuformenden Material des Vorformlings und dem Füllprodukt, ein geeigneter Überdruck in dem Füllprodukt erzeugt werden. Gleiches gilt für das Füllprodukt in der Zuführleitung 15, wobei das restliche Ausformen des Vorformlings auch mit diesem Füllprodukt vorgenommen werden kann.

Zum Streckformen ist als Teil der Formfüllmaschine weiterhin eine Reckstange 13 vorgesehen, die entlang der gezeigten Pfeilrichtung 13a in den Vorformling 3 hineingefahren werden kann, um den Vorformling 3 auf seine Solllänge zu strecken. Bei Verwendung einer hohlgebohrten Reckstange 13 kann über eine hier exemplarisch als Absaugleitung 16 dargestellte Verbindung mit dem Medienverteiler 19 bereits eingefülltes Medium oder Füllprodukt wieder aus dem Vorformling 3 bzw. dem Behälter ausgebracht werden. Die Reckstange 13 kann auch zum Befüllen und/oder weiteren Ausformen des Behälters bzw. Vorformlings 3 verwendet werden. Dazu kann die Reckstange 13 an ihrem der Hohlform 6 zugewandten Ende eine Öffnung und/oder entlang ihrer Längsrichtung angeordnete Öffnungen 13b aufweisen.

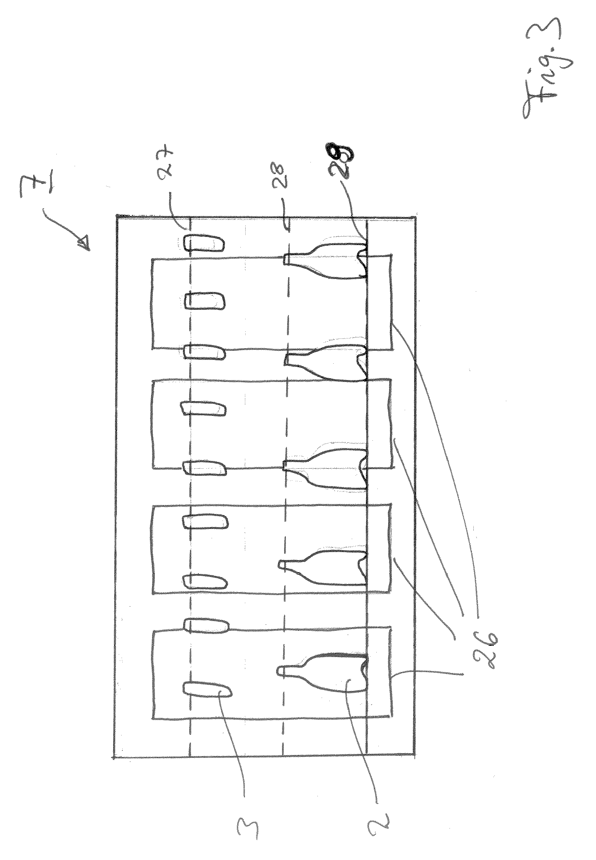

Figur 3 zeigt einen Querschnitt einer ersten Ausführungsform des Ofens 7, durch den die Pasteurisierungsstrecke 29 und die Vorheizstrecke verlaufen. Die gefüllten Kunststoffbehälter 3 werden in einer ersten Ebene 28 entlang der Pasteurisierungsstrecke 29 transportiert und die Vorformlinge in einer zweiten Ebene 27 entlang der Vorheizstrecke. Die erste Ebene 28 und die zweite Ebene 27 sind übereinander angeordnet. Für das Aufheizen der Vorformlinge 3 und für das Pasteurisieren der gefüllten Kunststoffbehälter 2 sind Heizelemente 26 vorgesehen. Da die Pasteurisierstrecke 29 durch den Ofen 7 verläuft, kann die Wärme des Ofens 7 direkt zum Pasteurisieren genutzt werden.

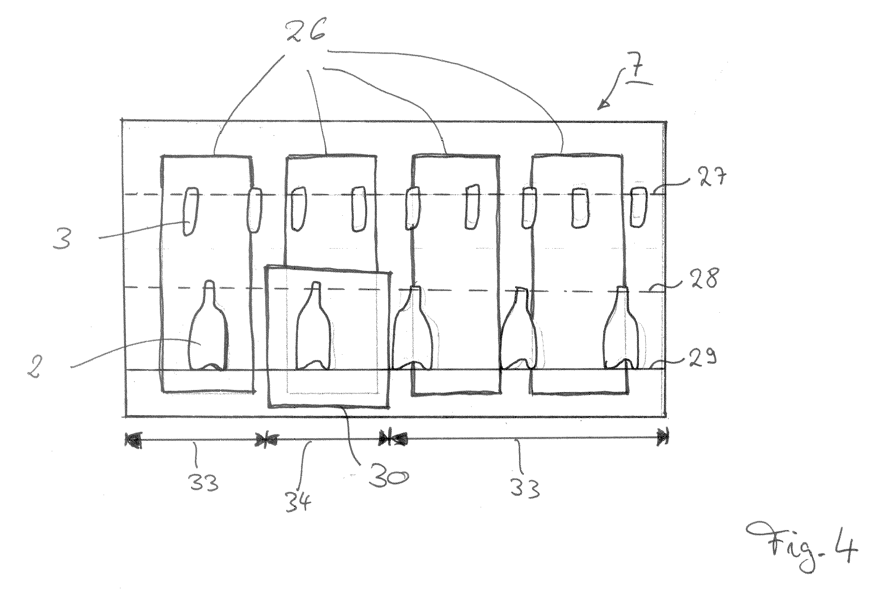

Figur 4 zeigt einen Querschnitt einer zweiten Ausführungsform des Ofens 7, die im Wesentlichen der ersten Ausführungsform der Figur 3 entspricht. Jedoch umfasst die Pasteurisierungsstrecke 29 nun zwei aktive Streckenabschnitte 33, in denen eine Zufuhr von Wärme durch die Heizelemente 26 stattfindet, und einen passiven Streckenabschnitt 34, in dem keine Zufuhr von Wärme durch die Heizelemente erfolgt. Die Pasteurisierungsstrecke 29 ist in dem passiven Streckenabschnitt durch eine Isolation 30 von den Heizelementen 26 abgeschirmt. Es kann auch vorgesehen sein, dass in dem passiven Streckenabschnitt 34 Umgebungsluft eingebracht wird.

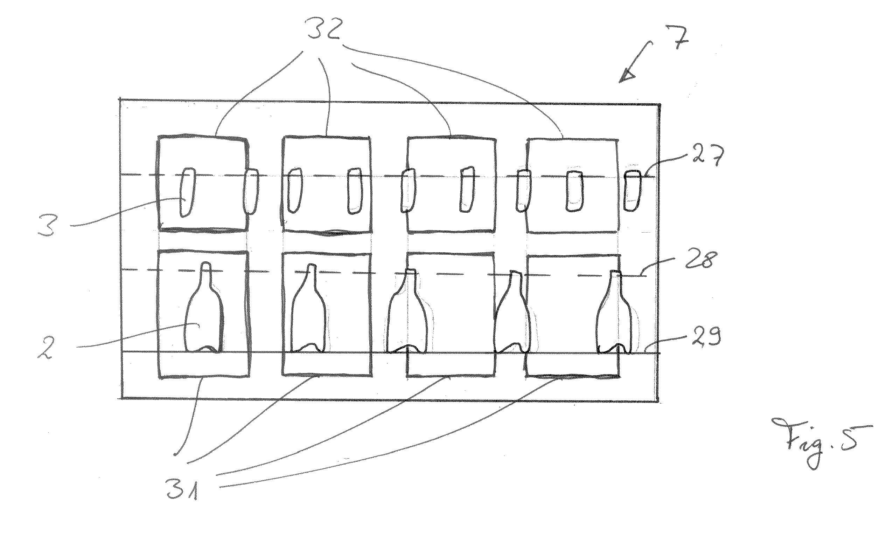

Figur 5 zeigt einen Querschnitt einer dritten Ausführungsform des Ofens 7, durch den die Pasteurisierungsstrecke 29 verläuft. Die gefüllten Kunststoffbehälter 3 werden in einer ersten Ebene 28 entlang der Pasteurisierungsstrecke 29 transportiert und die Vorformlinge in einer zweiten Ebene 27 entlang der Vorheizstrecke. Die erste Ebene 28 und die zweite Ebene 27 sind übereinander angeordnet. Für das Aufheizen der Vorformlinge 3 sind erste Heizelemente 32 und für das Pasteurisieren der gefüllten Kunststoffbehälter sind zweite Heizelemente 31 vorgesehen. Somit können die ersten Heizelemente beispielsweise auf eine andere Temperatur als die zweiten Heizelemente eingestellt werden, wodurch es auf einfache Weise möglich ist, unterschiedliche Temperaturen für die Pasteurisierung der gefüllten Kunststoffbehälter und für das Aufheizen der Vorformlinge zu erreichen.

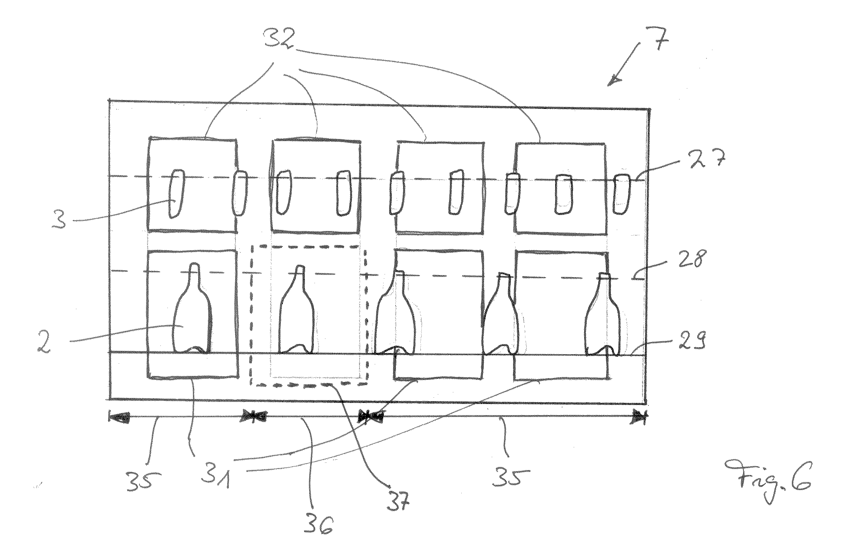

Figur 6 zeigt einen Querschnitt einer vierten Ausführungsform des Ofens 7, die im Wesentlichen der dritten Ausführungsform der Figur 5 entspricht. Jedoch umfasst die Pasteurisierungsstrecke 29 nun zwei aktive Streckenabschnitte 35, in denen eine Zufuhr von Wärme durch die Heizelemente 31 stattfindet, und einen passiven Streckenabschnitt 36. In dem passiven Streckenabschnitt 36 können entweder keine zweiten Heizelemente vorgesehen sein oder, wenn zweite Heizelemente vorgesehen sind, kann der passive Streckenabschnitt 36 durch eine Isolation 37 von den zweiten Heizelementen 31 abgeschirmt sein. In dem passiven Streckenabschnitt 36 erfolgt somit keine Zufuhr von Wärme durch die Heizelemente. Es kann auch vorgesehen sein, dass in dem passiven Streckenabschnitt 36 Umgebungsluft eingebracht wird.

Die in den Figuren 3 bis 6 beschriebenen Ausführungsformen des Ofens können auch derart ausgebildet sein, dass die erste Ebene, in der die Pasteurisierstrecke verläuft, oberhalb der zweiten Ebene, in der die Vorheizstrecke der Vorformlinge verläuft, angeordnet ist.

## Patentansprüche

1. Formfüllmaschine (1) zum Ausformen und Füllen von Kunststoffbehältern (2) mit wenigstens einer Behandlungsstation (5) zum expandierenden Umformen von Vorformlingen (3) zu Kunststoffbehältern (2) in einer Hohlform (6) und zum Einfüllen eines im Wesentlichen flüssigen Produkts oder wenigstens einer flüssigen oder festen Komponente des im Wesentlichen flüssigen Produkts in die Kunststoffbehälter (2) in der Hohlform (6) und mit einem Ofen (7) mit einer Vorheizstrecke (25) zum Aufheizen der Vorformlinge (3),
**gekennzeichnet durch**
eine Pasteurisierstrecke (29) zum Pasteurisieren der gefüllten Kunststoffbehälter (2), wobei zum Pasteurisieren zumindest teilweise Wärme des Ofens (7) verwendet wird.

2. Formfüllmaschine (1) nach Anspruch 1, wobei die Pasteurisierstrecke (29) durch den Ofen (7) verläuft.

3. Formfüllmaschine (1) nach Anspruch 2, wobei die Pasteurisierstrecke in einer ersten Ebene (28) und die Vorheizstrecke (25) der Vorformlinge (3) in einer zweiten Ebene (27) des Ofens (7) angeordnet sind, wobei die erste Ebene (28) und die zweite Ebene (27) übereinander angeordnet sind.

4. Formfüllmaschine (1) nach Anspruch 3, wobei eine erste Transportrichtung der Pasteurisierstrecke (29) gleichsinnig oder gegensinnig zu einer zweiten Transportrichtung der Vorheizstrecke (25) ausgerichtet ist.

5. Formfüllmaschine (1) nach Anspruch 3 oder 4, wobei zum Pasteurisieren der gefüllten Kunststoffbehälter (2) und zum Aufheizen der Vorformlinge (3) in dem Ofen (7) Heizelemente (26, 31, 32) angeordnet sind.

6. Formfüllmaschine (1) nach Anspruch 5, wobei erste Heizelemente (31) zum Pasteurisieren der gefüllten Kunststoffbehälter (2) und zweite Heizelemente (32) zum Aufheizen der Vorformlinge (3) vorgesehen sind.

7. Formfüllmaschine nach Anspruch 5, wobei die Heizelemente (26) sowohl zum Pasteurisieren der gefüllten Kunststoffbehälter (2) als auch zum Aufheizen der Vorformlinge (3) vorgesehen sind.

8. Formfüllmaschine (1) nach Anspruch 1, die zudem eine Pasteurisiereinheit umfasst, in der die Pasteurisierstrecke angeordnet ist, wobei die Pasteurisiereinheit derart ausgebildet ist, um durch die Wärme des Ofens (7) erwärmt zu werden.

9. Formfüllmaschine (1) nach Anspruch 8, die zudem einen oder mehrere Wärmetauscher umfasst, die dazu ausgelegt sind, die Wärme des Ofens (7) zumindest teilweise an die Pasteurisiereinheit zu übertragen.

10. Formfüllmaschine (1) nach einem der Ansprüche 1 bis 9, wobei die Pasteurisierstrecke (29) aktive Streckenabschnitte (33, 35), die einer Zufuhr von Wärme dienen, und passive Streckenabschnitte (34, 36), bei denen keine Zufuhr von Wärme erfolgt oder Umgebungsluft eingebracht wird, umfasst.

11. Formfüllmaschine (1) nach einem der Ansprüche 1 bis 10, wobei eine erste Transportvorrichtung (23, 24, 25) der Vorformlinge (3) der Vorheizstrecke (25) unabhängig von einer zweiten Transportvorrichtung der gefüllten Kunststoffbehälter (2) der Pasteurisierstrecke (29) steuerbar ist.

12. Formfüllmaschine (1) nach einem der Ansprüche 1 bis 11, die zudem eine Sterilisierungsvorrichtung umfasst, die dazu ausgelegt ist, mittels durch die Wärme des Ofens (7) erzeugten Dampf, die gefüllten Kunststoffbehälter (2) zu sterilisieren.
